# EUROPEAN PATENT APPLICATION

(11) **EP 2 020 648 A2**
(43) Date of publication of application: **04.02.2009**
(21) Application number: 08104745.8
(22) Date of filing: 14.07.2008
(51) Int. Cl.: G08B 27/00

(54) **Method and apparatus for configurable emergency alert system event notification**

(30) Priority: 25.07.2007 CN 200710075304; 29.08.2007 US 896097
(71) Applicant: TTE Indianapolis, 46290 Indiana, Indianapolis (US)
(72) Inventor: Modi, Khelan Maheshchandra, Indianapolis, IN 46250 (US); Cooper, Steven Lee, Whitestown, IN 46075 (US)
(74) Representative: Mohun, Stephen John

(57) **Abstract**

A method of providing Emergency Alert System event notifications according to configurable notification options includes the steps of configuring the notification options, storing into a memory the configured notification options, receiving Emergency Alert System event information, generating an emergency alert message that corresponds to the Emergency Alert System event information, and transmitting the emergency alert message according to the configured notification options.

## Description

### BACKGROUND OF THE INVENTION

### FIELD OF THE INVENTION

The present invention relates to a notification method and apparatus for Emergency Alert System (EAS) events, and more particularly, to configurable notification options that can alert a user of an EAS event.

### DISCUSSION OF THE RELATED ART

The Emergency Alert System (EAS) is a national system that requires broadcast and cable systems to administer national alerts and warnings and required testing. Although never activated for its original purpose, the EAS was originally designed to provide the President with the ability to access broadcasting and cable facilities to directly address the public in the event of a national emergency.

Established in 1994, the EAS replaced its predecessor, the Emergency Broadcasting System (EBS), which was established in 1963. The EAS is administered by the Federal Communications Commission (FCC), Federal Emergency Management Agency (FEMA), and the National Weather Service (NWS). The EAS has grown additionally, at present, to exist on state and local levels through State Emergency Coordination Committees (SECCs) and Local Emergency Coordination Committees (LECCs). The SCTE 18 Standard is a standard published by the Society of Cable Telecommunications Engineers defining the EAS in detail and is a standard that cable service providers and broadcasters may follow to comply with the EAS.

In the related art, a user can be notified of an EAS event in several ways. While watching a television unit, the broadcast may be interrupted or a scrolling message may be superimposed on the bottom of the television screen. Alternatively, if a user is listening to a broadcast on the radio, the broadcast is often interrupted and replaced with an emergency message. In these systems, however, the user is limited by the broadcast or cable service provider in how they are notified of the occurrence of an EAS event. The broadcast and cable service providers at the headend designate and choose methods in which to transmit and convey the EAS event. Additionally, users who are not actively watching or listening to their television or radio units may miss important warnings or EAS events.

### SUMMARY OF THE INVENTION

Accordingly, the present invention is directed to providing EAS event notifications according to configurable notification options that substantially obviates one or more problems due to limitations and disadvantages of the related art.

An object of the present invention is to provide a method, apparatus, and computer software program for providing configurable notification options directed to EAS events.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the method of providing EAS event notifications according to configurable notification options includes the steps of configuring at least one of a plurality of emergency alert message notification options, storing into a memory the at least one of a plurality of configured notification options, receiving emergency alert event information, generating an emergency alert message corresponding to the emergency alert event information, and transmitting the emergency alert message according to the at least one of a plurality of configured notification options.

In another aspect, in a digital cable ready device, an apparatus for providing EAS event notifications according to configurable notification options includes an input that receives emergency alert event information from a headend, a memory having storage for at least one of a plurality of configurable notification options, a processor coupled to the input and the memory, the processor generating an emergency alert message according to the emergency alert event information and determining how to transmit the emergency alert message according to the at least one of a plurality of configurable notification options, and an output port coupled to the processor, the output port transmitting the emergency alert message according to the at least one of a plurality of configured notification options.

In another aspect, a computer software program for providing EAS event notifications according to configurable notification options includes a computer software program performing the steps of configuring at least one of a plurality of emergency alert message notification options, storing into a memory the at least one of a plurality of configured notification options, receiving emergency alert event information, generating an emergency alert message corresponding to the emergency alert event information, and transmitting the emergency alert message according to the at least one of a plurality of configured notification options.

In yet another aspect, the configurable notification options of the method, computer software program, and apparatus for providing EAS event notifications can be selected from a plurality of notification options that includes selecting at least one of: an audible tone, an audible voice, a light emitting diode, an electronic message, a volume level and powering on a digital cable ready device from a standby mode, an EAS event priority level, or a time for notification.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:

FIG. I is a conceptual block diagram illustrating an exemplary EAS notification system according to the present invention.

FIG. 2 is a schematic of an exemplary EAS notification device for providing configurable notification options directed to EAS events according to the present invention.

FIG. 3 is a flow diagram illustrating an exemplary embodiment of how the notification options for EAS events are configured according to the present invention.

FIG. 4 is an exemplary screen display of a setup menu according to the present invention.

FIG. 5 is a flow diagram demonstrating the operation of an exemplary embodiment for receiving an EAS event and notifying the user of an EAS event based upon the configured notification options according to the present invention.

FIG. 6 shows a block diagram of an exemplary digital cable ready television set as an embodiment of the present invention.

### DETAILED DESCRIPTION OF THE PREFERRED EMBODIMENTS

Reference will now be made in detail to embodiments of the present invention, examples of which are illustrated in the accompanying drawings.

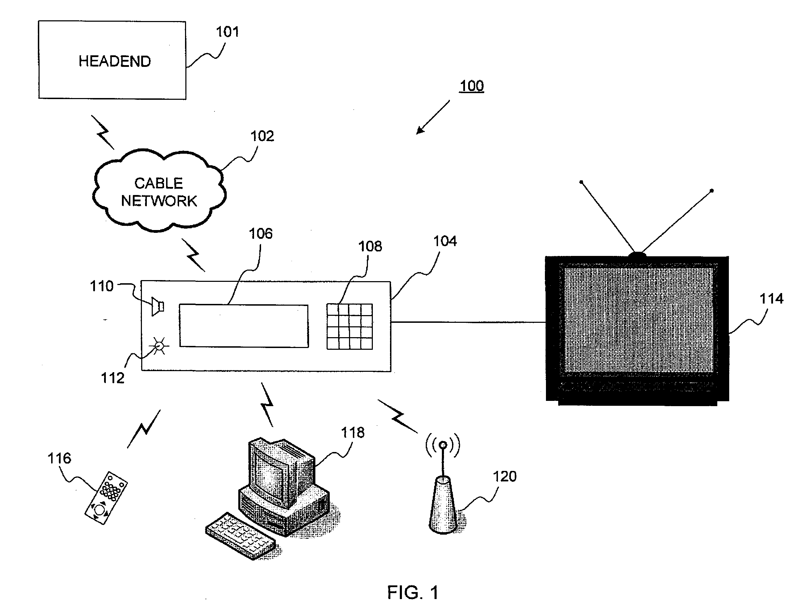

FIG. 1 is a conceptual block diagram illustrating an exemplary EAS notification system. The system 100 includes a headend 101, cable network 102, set-top box 104, and a television unit 114. As shown in FIG. 1, the system 100 can further include a remote control 116, a computer 118, and a wireless access point 120. The set-top box 104 is coupled to a television unit 114 and to headend 101 via cable network 102. The set-top box 104 is comprised of circuitry, software, or a combination thereof to receive, process, store, and transmit emergency alert information, a display 106 that can display the emergency alert message, a keypad 108 that can be used to configure and store notification options, a speaker 110 capable of transmitting the audible notification options, and an LED 112 capable of blinking at a configured frequency.

The notification options can be configured using a plurality of options that include one or more of: a keypad 108 on the set-top box 104, a remote control 116, a computer 118 coupled to the set-top box 104, or a television unit 114 coupled to the set-top box 104. The computer 118 may be directly coupled to the set-top box 104 or coupled via a network connection or wireless interface. Additionally, the notification options may be entered by a user or any third-party operator via a wireless access point 120 or a network system that is coupled to the set-top box 104 via a network connection. The network connection could be part of the cable network 102 or, alternatively, a separate network. As a result, the user need not personally configure the notification options. For example, a representative for the cable service provider can configure the notification options remotely for their end-subscribers using a network system or a wireless access point.

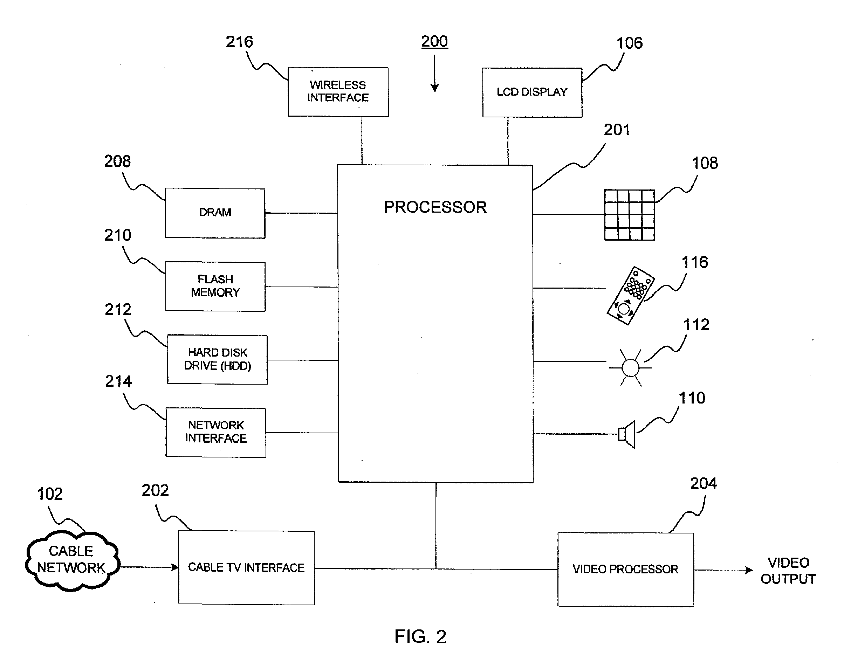

FIG. 2 is a schematic of an EAS notification device 200 for providing configurable notification options directed to EAS events. In this embodiment, the notification device 200 is integral with set-top box 104. The configurable EAS notification device 200 includes a processor 201 that is coupled to the cable network 102 via the cable television interface 202. The device 200 also comprises a plurality of memory devices 208, 210, and 212 for storing emergency alert information and notification options and interface units 214 and 216 for receiving and transmitting emergency alert information and notification options. Additionally, the processor 201 is coupled to an LCD display 106, an LED 112, and a speaker 110, all of which assist in transmitting the emergency alert notifications. Also shown is a video processor 204, which generates an output for television unit 114.

The operation of the EAS notification system and device will now be discussed in greater detail with reference to FIG. 1 and FIG. 2. The EAS event information is sent to the set-top box 104 via a cable network 102 from the headend 101. After the EAS event information is received, stored, and processed by the EAS notification apparatus shown in FIG. 2, it is transmitted according to the configured notification options, as described in greater detail below.

After the EAS event information is received from the cable network 102 via the cable television interface 202, it is processed by a processing unit 201 and stored into one or more of the DRAM 208, flash memory 210, or hard disk drive 212 where it is later used to generate an emergency alert message based upon notification options configured by the user. For example, the flash memory 210 may be used to store the configured notification options, the hard disk drive 212 may be used to store default settings, and the DRAM 208 may be used to store the incoming EAS event information. The memory devices 208, 210, and 212 operate to perform similar tasks. As a result, a particular storage task can be executed by any of the memory devices. For example, the configured notification options can be stored in either the flash memory 210, the hard disk drive 212, or the DRAM 208. Additionally, other memory devices such as SDRAM, are contemplated, and are interchangeable with the memory devices listed above to accomplish the same task.

The notification options can be configured and stored into one or more of the memory devices 208, 210, or 212 by the processor 201 using a plurality of options. These options include one or more of a keypad 108, a remote control 116, a computer 118, or a television unit 114. The notification options can be configured using a multitude of devices so long as the device has an output port and can be coupled to the processor 201. For example, the notification options may be entered by a user or any third-party operator via a wireless access point 120 that is coupled to the processor 201 via a wireless interface 216 or a network system that is coupled to the processor 201 via a network interface 214.

After the emergency alert message is generated via the processor 201, the emergency alert message is transmitted according to the configured notification options previously stored into the memory devices 208, 210, or 212. As described in greater detail below, the emergency alert notifications are transmitted using the LCD display 106, the LED 112, the speaker 110, wireless interface 216, or network interface 214. The set-top box 104 need not be operating at a full power mode in order to receive EAS event information or transmit the notifications, but rather may be operating on a standby mode. Standby mode is a low power consumption mode, such as a sleep mode, or any other mode that allows the device to receive and process incoming EAS event information while maintaining some or all other functionality at low power or powered off.

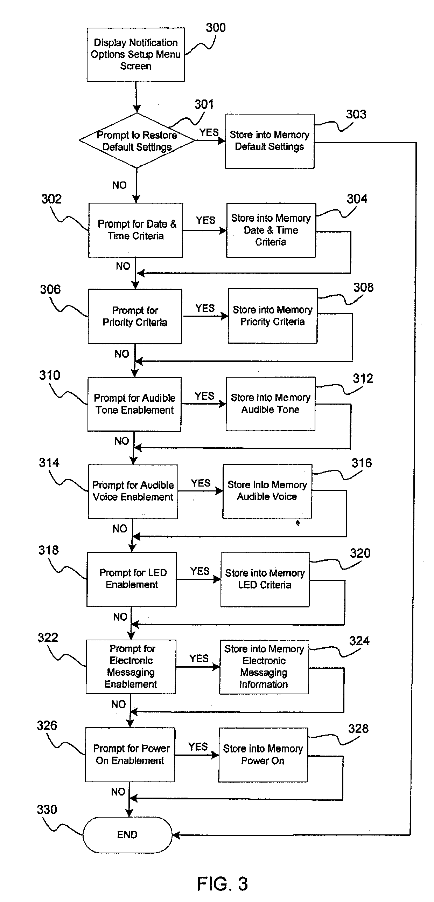

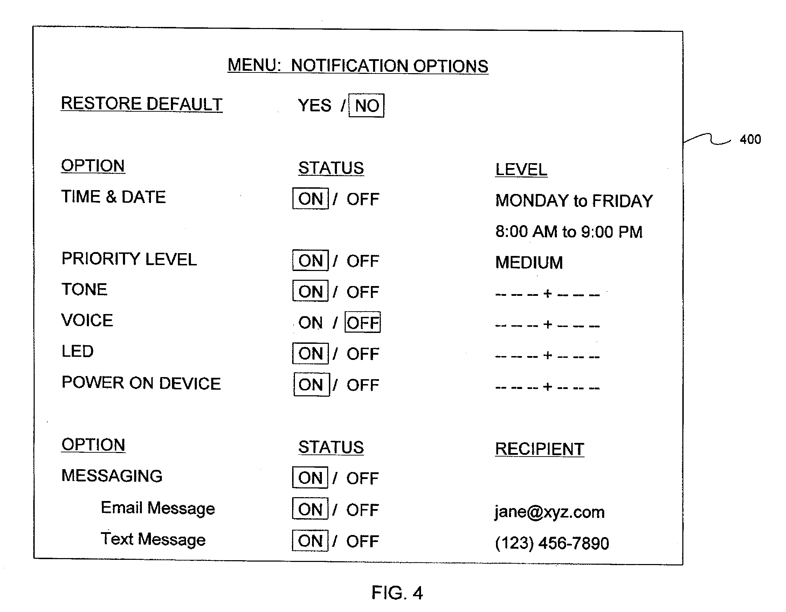

FIG. 3 is a flow diagram illustrating how the notification options for EAS events are configured. A user first accesses the notification options setup menu in step 300. FIG. 4 illustrates such an exemplary screen display of the setup menu 400. The user may select to restore the default notification settings (step 301), which will store the default settings into the memory (step 303) and complete (step 330) the notification option setup.

Should the user decide to change the default settings, the user can then select from a plurality notification options to activate that includes one or more of: an audible tone, an audible voice, a light emitting diode, an electronic message, a volume level and powering on a digital cable ready device from an off mode, an EAS event priority level, and a time for notification. Other configurable notification options are contemplated as well. For example, a user may wish to be notified of emergency events based only on the event types, for example, civic alerts or weather alerts. Or, the user may wish to be notified of emergency events based on the geographic location of the emergency event. For example, the user could receive alerts pertaining to the user's county of residence. It is within the user's discretion to enable any, all, or none of the notification options. This creates a convenient notification system that can easily be adapted to an individual's needs and lifestyle.

The user may then select date and time criteria (step 302) for EAS notifications and store that information into the memory (step 304). For example, the user may choose to be notified of EAS events only during certain hours of the day, certain days of the week, or may choose to not receive notifications during certain time periods, for example, when away on vacation.

The user can then select a priority level. EAS events are assigned priority codes ranging from low priority, medium priority, high priority, and maximum priority. A user can choose to be notified of EAS events assigned a certain priority level or EAS events that are above a certain priority level (step 306). Thus, a user can choose to be notified only of events that the user deems significant. Additionally, it is possible for the user to elect to always be notified of EAS events assigned a certain priority level and override the date and time notification option. For example, the user may elect to always be notified of maximum priority EAS events. The priority level information is then stored into the memory (step 308).

The user can then select to be notified of the occurrence of EAS events by an audible tone (step 310). Additionally, the user can select the volume at which audible tone will sound and the selected levels will then be stored into the memory (step 312). For example, the user may choose to be alerted of EAS events with a loud audible tone. Similarly, the user may choose an audible voice to convey the alert (step 314). The volume level at which the audible voice speaks is selectable by the user and stored into the memory (step 316).

The user may also then choose to be notified of the occurrence of EAS events by a blinking light emitting diode (LED) (step 318). The frequency at which the LED blinks can be configured by the user and stored into the memory (step 320). For example, the user may choose to be alerted of high priority EAS events with a faster blinking LED and be alerted of low priority EAS events with a slower blinking LED. Thus, the user has the ability to customize the notification options.

An additional option that the user may then select is an electronic messaging notification option (step 322). With this option, the user can be notified of EAS events via an electronic message, for example, an email message or a text message. The user can enter multiple email addresses and cellular phone numbers to send the alerts, which will be stored into the memory (step 324). In this way, the user can be conveniently alerted of relevant EAS events when away from the digital cable ready device. For example, a user can be alerted of an EAS event while on vacation, at work, or in the car. Similarly, a user can configure the system to send notification to other family members.

Additionally, the user may then choose to be notified of an EAS event by selecting a volume level and powering on the digital cable ready device (step 326). For example, upon the occurrence of an EAS event, the digital cable ready device will power on at a user-selected volume level. The selection of the volume level and powering on option will be stored into the memory (step 328).

Default settings remain enabled should the user not select any notification options. Further, the notification options may be configured in any sequence and are not limited to the order exemplified above. Moreover, the user may configure the notification options using any combination of the above listed notification options. For example, the user may select the volume levels of the audible tone, audible voice, or digital cable ready device based on the EAS event priority code criteria or date and time criteria. Thus, the user may elect higher volume levels for high priority events, or elect higher volume levels for EAS events occurring during a particular time of the day. Similarly, the user can select a faster blinking LED notification for higher priority EAS events, and so forth. In this way, the user can be alerted of emergency events in an effective manner of their own choosing.

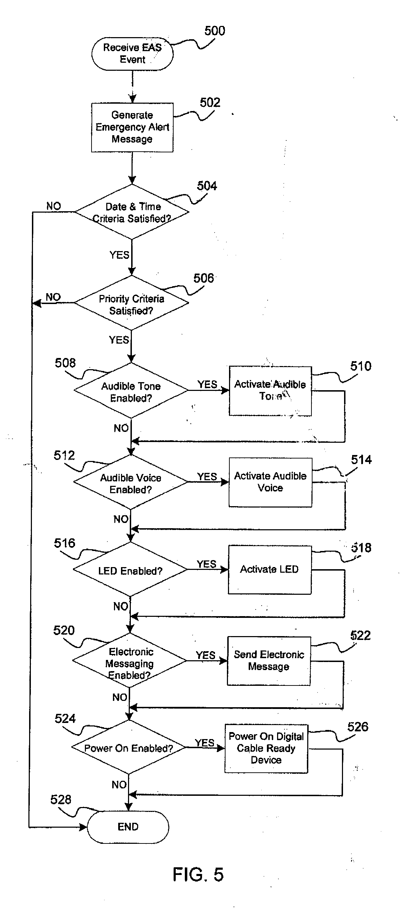

FIG. 5 is a flow diagram demonstrating the operation of receiving an EAS event and notifying the user of an EAS event based upon the configured notification options. When an EAS event is received (step 500), an emergency alert message is generated (step 502) based upon the EAS event information that is transmitted from the headend 101. Using the configured notification options stored in the memory devices 208, 210, or 212, it is then determined whether the criteria of the notification options have been satisfied.

First, it must be determined whether the date and time and priority criteria have been satisfied (steps 504 and 506). For example, if the priority level of the EAS event priority does not satisfy the stored notification option priority level requirement, the emergency alert message is not transmitted, the other notification options will not be enabled, and this sequence will terminate (step 528). The date and time and priority criteria determination may be performed in any order.

If the date and time (step 504) and priority level criteria (step 506) are met, then the user will be notified of the EAS event according to the notification options that have been enabled (steps 508 to 528) and the configured notification settings stored in the memory devices 208, 210, or 212.
If the audible tone notification option has been enabled (step 508), then the audible tone will be activated according to the configured notification settings (step 510). For example, if the audible tone volume level was selected at a high volume, then the audible tone will sound at a high volume. Similarly, if the audible voice has been enabled (step 512), then the audible voice notification option will be activated according to the configured setting (step 514). Additionally, if the LED has been enabled (step 516), then the LED will be activated (step 518) and blink at the rate according the setting stored in the memory 208, 210, or 212.

If the electronic messaging option has been enabled (step 520), then an electronic message will be sent (step 522) to the recipients stored in the memory 208, 210, or 212. The electronic message may be configured to either contain the contents of the emergency alert message, the EAS event information, or contain information indicating where the recipient can obtain additional information regarding the EAS event. The email messages and/or text messages may be configured to be sent to multiple recipients through a variety of means. For example, the electronic messaging option can be configured to be sent to an email account, as a reminder or alarm to a cellular phone or personal digital assistant (PDA), or as a message to a pager. These messages may also be sent via a wireless interface or some other type of network interface.

If the power on digital cable ready device has been enabled (step 524), then the digital cable ready device will be powered on and set to the volume level stored in the configured setting (step 526). For example, utilizing the exemplary embodiment of FIG. I where the digital cable ready device is a set-top box, this notification option would power on the set-top box 104 and set it to a configured volume level.

The steps shown in FIG. 5 illustrate one embodiment of the invention. However, it is contemplated that the steps could be performed in another order or some steps eliminated altogether. For example, the emergency alert message could be generated after comparing the EAS event against the notification options. If no notification criteria were met, then no message need be generated.

The configurable EAS notification apparatus need not be limited to a set-top box, but may be embodied in several forms and integrated into different devices and still accomplish the same goal. For example, the invention may also be practiced using other digital cable ready devices such as digital television receivers, digital VCRs, or digital radio systems. The EAS notification apparatus could be directly integrated by the manufacturer into the circuitry of a device, integrated into a single chip to be installed by either a manufacturer or end-user, or integrated as software capable of being directly installed into the device or uploaded into the device via a network connection or wireless network connection. For example, the notification system could be a software file that can be downloaded over the Internet by a user from their cable subscriber's website. Similarly, the notification system could be installed into a laptop or personal computer with a television card. As another example, the notifications could also be embodied in a separate stand-alone device devoted to displaying and transmitting emergency notifications. In this case, the notifications could be transmitted to a portable unit that the user can always carry on his person.

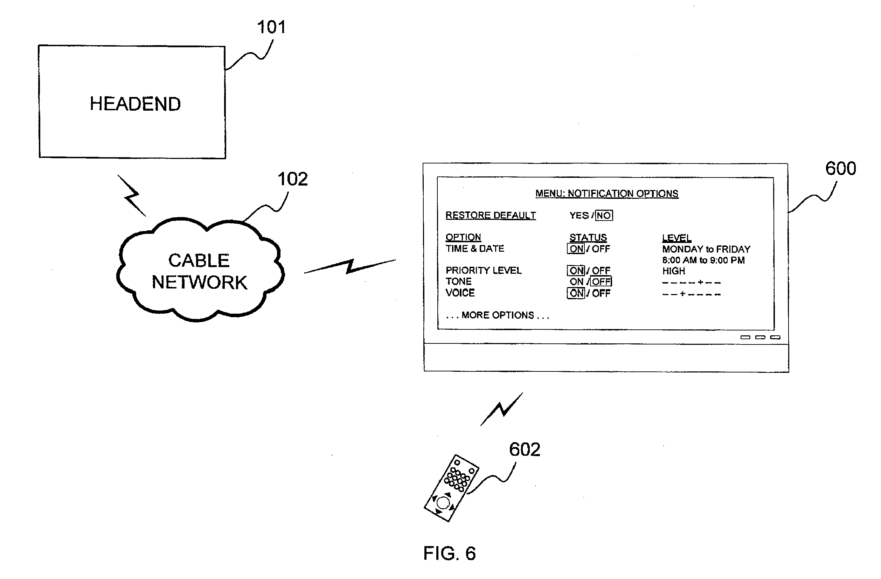

As another example of an embodiment of the invention, FIG. 6 shows a block diagram of a digital cable ready television set 600. In this embodiment, the emergency alert notification apparatus is integrated directly into the television set 600. The television set 600 is coupled to the headend 101 via a cable network 102. The television set 600 retains many of the features and essential elements of the set-top box 104 illustrated in FIG. 1 and performs in a manner very similar to the set-top box 104. Thus, for example, in the exemplary embodiment of FIG. 6, configured notification options could be entered using a remote control 602 and the notification options could be configured to cause the LED on the television 600 to blink or create an audible alert that would transmit via the speakers of the television set 600. All of the previously described configuration and notification steps and options are equally applicable to this embodiment.

Additionally, the present EAS notification apparatus and method need not be limited to only cable television systems or the Emergency Alert System, but also has utility in any broadcasting network environment that may disseminate emergency alerts or important messages. For example, local television stations, radio broadcasters, satellite television providers, or fiber optic service providers may need to transmit local emergency messages not falling within the scope of the Emergency Alert System. The invention described herein could be used in any of these environments.

It will be apparent to those skilled in the art that various modifications and variations can be made in the method of providing an EAS event notification of the present invention without departing from the spirit or scope of the invention. Thus, it is intended that the present invention cover the modifications and variations of this invention provided they come within the scope of the appended claims and their equivalents.

## Claims

1. A method of providing an emergency alert event notification in a digital cable ready device, comprising the steps of:
configuring at least one of a plurality of emergency alert message notification options;
storing into a memory the at least one of a plurality of configured notification options;
receiving emergency alert event information;
generating an emergency alert message corresponding to the emergency alert event information; and
transmitting the emergency alert message according to the at least one of a plurality of configured notification options.

2. The method of claim 1, wherein the configuring step comprises at least one of:
operating a keypad directly coupled to the digital cable ready device;
operating a remote control unit; or
entering information into a network connection that is coupled via the network to the digital cable ready device.

3. In a digital cable ready device, an apparatus for providing event notification, comprising:
an input that receives emergency alert event information from a headend;
a memory having storage for at least one of a plurality of configurable notification options;
a processor coupled to the input and the memory, the processor generating an emergency alert message according to the emergency alert event information and determining how to transmit the emergency alert message according to the at least one of a plurality of configurable notification options; and
an output port coupled to the processor, the output port transmitting the emergency alert message according to the at least one of a plurality of configured notification options.

4. The method of claim 1 or apparatus of claim 3 wherein the digital cable ready device is in standby mode when the emergency alert event information is received.

5. The apparatus of claim 3, further comprising at least one of the following configuration devices:
a keypad directly coupled to the apparatus;
a remote control unit; or
a network connection that is coupled via a network to the apparatus.

6. The method of claim 1 or apparatus of claim 3 wherein the plurality of notification options includes:
an audible tone having a selectable volume level;
an audible voice having a selectable volume level;
a light emitting diode having a selectable volume blinking frequency;
an electronic message;
powering on a digital cable ready device from a standby mode and a selectable volume level;
a selectable emergency alert event priority level; or
a selectable notification time.

7. The method of claim 1 or apparatus of claim 3 wherein the at least one of a plurality of notification options is configured according to default values.

8. The method of claim 1 or apparatus of claim 3 wherein the time for notification is selectable according to one or more of years, months, days, hours, or minutes.

9. The method of claim 1 or apparatus of claim 3 wherein the at least one of a plurality of notification options is an electronic message wherein at least one recipient is specified.

10. The method or apparatus of claim 9, wherein the electronic message is an email message.

11. The method or apparatus of claim 9, wherein the electronic message is a text message.

12. The method of claim 1 or apparatus of claim 3 wherein the at least one of a plurality of notification options is to configure notification according to emergency alert event priority levels.

13. The method of claim 1 or apparatus of claim 3 wherein the at least one of a plurality of notification options is configured according to a selectable emergency alert event priority level.

14. A method of providing an emergency alert event notification in a digital cable ready device, comprising the steps of:
configuring an emergency alert notification option, wherein at least one recipient is specified;
storing into a memory the configured emergency alert notification option;
receiving emergency alert event information;
generating an emergency alert message corresponding to the emergency alert event information; and
transmitting the emergency alert message to the recipient via at least one of email or text message according to the configured notification option.

15. A method of providing an emergency alert event notification, comprising the steps of:
configuring at least one of a plurality of emergency alert message notification options;
storing into a memory the at least one of a plurality of configured notification options;
receiving emergency alert event information from a broadcast network;
generating an emergency alert message corresponding to the emergency alert event information; and
transmitting the emergency alert message according to the at least one of a plurality of configured notification options.

16. A method of providing an event notification in a digital cable ready device, comprising the steps of:
configuring at least one of a plurality of alert message notification options;
storing into a memory the at least one of a plurality of configured notification options;
receiving event information;
generating an alert message corresponding to the alert event information; and
transmitting the alert message according to the at least one of a plurality of configured notification options.

17. A program storage device readable by a machine, tangibly embodying a program of instructions executable by the machine to perform the method of providing an emergency alert event notification, comprising the steps of:
configuring at least one of a plurality of emergency alert message notification options;
storing into a memory the at least one of a plurality of configured notification options;
receiving emergency alert event information from a broadcast network;
generating an emergency alert message corresponding to the emergency alert event information; and
transmitting the emergency alert message according to the at least one of a plurality of configured notification options.
